# EUROPEAN PATENT APPLICATION

(11) **EP 4 162 828 A1**
(43) Date of publication of application: **12.04.2023**
(21) Application number: 20939362.8
(22) Date of filing: 03.06.2020
(51) Int. Cl.: A41D 13/11, A62B 18/02, A62B 23/02, B32B 5/24, B32B 27/30

(54) **DISPOSABLE CLOTH MASK, WATER-SOLUBLE IN HOT WATER, FOR THE ELIMINATION OF PATHOGENS**

(71) Applicant: Solubag SPA, Santiago, 8020350 (CL)
(72) Inventor: ASTETE BOETTCHER, Roberto Carlos, SAN PEDRO DE LA PAZ Concepción, 4130107 (CL)
(74) Representative: Ballester Cañizares, Rosalia
(86) International application number: PCT/CL2020/050060
(87) International publication number: WO 2021/243475

(57) **Abstract**

The invention relates to a disposable face mask, which covers from the chin to the nasal dorsum, for the capture, containment and elimination of human pathogens (including COVID-19), consisting of lateral fastening elements for adjusting the mask to the user and at least one layer, preferably at least two superimposed layers of a material hot water-soluble at a temperature of at least 55°C, with a grammage of the water-soluble material which varies in the range of 6 to 100 g/m². The soluble material of which the mask is composed begins to dissolve at 55°C and is completely disintegrated at 90°C; therefore, this high temperature of solubilisation of the material allows the elimination of the pathogens retained in the mask, among which COVID-19 is inactivated at 56°C.

## Description

### TECHNICAL FIELD OF THE INVENTION

In general, the present invention is directed to the field of medical devices, it specifically refers to a disposable face mask for capture, containment and elimination of pathogens, thus reducing transmission of infectious diseases. More specifically, the present invention refers to a structure composed of one or more layers of a material capable of retaining and eliminating a broad spectrum of infectious pathogens, particularly, COVID-19. The present invention is also directed to environmental care, since this face mask uses a water-soluble material fabric or cloth that disintegrates upon contact with hot water, thus reducing tons of waste generated by used masks which are disposed of in the garbage.

### BACKGROUND OF THE INVENTION

Face masks are a device intended to cover part of the user's face from external factors such as splashes of fluids, blood, dust, gases, burns, particles and pathogens. The main purpose of masks is filtering harmful materials of the inhaled and exhaled air.

As regards of medical sanitary masks, these are used to avoid (if possible) the spread of diseases. In this context, face masks should be worn by both the infected individual (to avoid transmission of infectious disease) and the uninfected individual (to avoid infection disease). Due to this, the use of protective masks is essential for many cares provided by healthcare personnel and other activities related to healthcare and well-being.

It should be noted that a variety of microorganisms and pathogenic particles in the environment can cause human infectious respiratory diseases. Said pathogens can be transmitted to a healthy individual through the air by infectious particles emitted by a sick individual either through coughing, sneezing, or exhalation.

A pathogenic particle, corresponding to a new type of coronavirus (COVID-19) that infects humans through the respiratory tract (as well as other mucosa), began to spread from China at the end of 2019 and the WHO declare this disease as global pandemic by March 2020 when it had already spread to practically all countries in the world. In this context, the main focus of care for controlling the pandemic has been the use of sanitary face masks for preventing person-to-person transmission, avoiding inhaling saliva droplets emitted by infected individuals when speaking or sneezing, or by contention of agents that can be exhaled by an infected person. However, the explosive use of this type of device showed some problems: a) first, there was a wide range of sanitary face masks (both disposable and reusable) but not all of them were effective in retaining pathogens, much less a virus such as coronavirus; and b) second, truly effective masks for this type of use were more expensive to manufacture, more difficult to obtain, and of primary use for health personnel (treating these patients), who found themselves without provisions, because people left markets undersupplied. On the other hand, the massive use of disposable sanitary face masks triggered a notorious increase in the generation of solid waste, many of them carrying pathogens.

Different types of masks are on the market which are being used by people to control the pandemic, but it is important to note that no mask is 100% effective, so its use must be accompanied by other sanitary measures, such as surface disinfection and constant hand washing, even so, the types of masks available are:
1) Surgical masks. Also called face masks, according to the FDA, correspond to a disposable devices with a loose fit to the face, which creates a barrier between the wearer's nose and mouth and possible contaminants in the immediate environment. These types of masks are mainly used for surgeries and other health procedures, having a metal band in the upper section, an inner filter generally made of polypropylene, and coated on the outside with another fabric called rayon. They have a maximum duration of 4 hours and should not be used if moistened.
   They protect from the inside out against larger particles, fluid spills, splashes and aerosols. They are rather used to prevent and reduce exposure to saliva and secretions that could contain pathogens, and are disposable.
2) Filtering masks. Also called respirators, according to the FDA, they are respiratory protection equipment designed to obtain a very close fit to the users' face and efficient filtration of airborne particles. They are the ones that filter the air that is inhaled from the outside, protecting from the outside to the inside, and are effective for preventing transmission, since they retain agents, particles or bacteria from the environment, being certified to different filtering capacities, including, but not limited to:
   - N95 (filter up to 95% of air elements): they are the most used healthcare personal protective equipment (PPE) for preventing spreading of infectious diseases and currently are the most effective against COVID-19. It has the higher filtering verified by external quality controls. Its effectiveness depends on a good nose fit and lasts for about two or three days. These can be of two types, with or without a filtering mask. Its effectiveness has been proven against particles as small as 0.3 microns in diameter, although coronavirus particles have been found to be between 0.05 and 0.2 microns and are generally transmitted by respiratory droplets larger than 5 microns and by direct contact with infected secretions. In this scenario, N95 masks do work as a preventive barrier.
   - FFP1 (particle filter P1 type): they have a minimum filtration efficiency of 78% and a maximum inward leakage percentage of 22%. It protects mainly from non-toxic and nonfibrogenic residues of dust or aerosols, preventing their inhalation and unpleasant odors.
   - FFP2 (particle filter P2 type): they have a minimum filtration efficiency of 92% and outward leakage of 8%. They prevent inhalation of toxic fluids from dust, aerosols and fumes. Said not having an exhalation valve protect and limit transmission, unlike those that do have a valve.
   - FFP3 (particle filter P3 type): they have a minimum filtration efficiency of 98%, outward leakage of 2%. They are used against highly toxic aerosols and are effective against bacteria, viruses and fungal spores. They protect, but do not limit spreading.
3) Gas and vapor masks. They are reusable masks, which are intended as elements of protection against toxic substances, aerosols, paints, but do not offer guarantees against microorganisms or particles, such as coronavirus. Although they all have exhalation valves, they protect, but do not limit transmission.
4) Homemade masks. Due to the shortage, people has begun to generate their own masks with homemade elements, most of them made of cloth. They are used solely as prevention, but they are not certified and in some cases they are very precarious (such as covering your mouth with any handkerchief). However, some people have generated more elaborate masks having folds, filters and several fabric layers and filters, which could protect (to some extent) from the droplets emitted by an infected person. Homemade masks may be disposable and reusable (mostly washable), but how many washes they can resist until losing their effectiveness is unknown.

Therefore, N95 masks are the best option for preventing COVID-19, surgical masks are not as effective against coronavirus spread, but their preventive use is equally important. In addition to N95, we have FFP2 and FFP3 type, but they are not as suitable for medical use and due to their very high demand (similar to N95), they are very expensive and it is difficult to find them on the market given the health crisis.

On the other hand, the growing use of masks for protecting against coronavirus has generated an increase in production and use of plastic in hospital equipment (the type that are used and discarded) and domestic use. It is important to highlight that plastic pollution is one of the main planet environmental issues and the masks being used in this pandemic have a filtering material made up of plastic fibers, therefore, all this waste cannot be recycled and will be destined to end either in landfills or incineration, though plastic waste burning generates emissions of carcinogenic compounds, such as dioxins and furans. Unfortunately, masks have already begun to be found floating on beaches (for example in the Soko Islands, located between Hong Kong and Lantau), which demonstrates the harmful environmental consequences caused by poor disposal of this waste. Additionally, low oil prices mean that a lot of even cheaper plastic could be made. (*Source: https:*//*ciperchile.cl*/*2020*/*05*/*06*/*danos-colaterales-de-la-covid-19-el-resurgir-del-plastico*/).

All this plastic material being discarded that already contribute to a negative impact on the environment may be additionally contaminated with coronavirus, since tests of COVID-19 stability on different surfaces form studies carried out by the *New England Journal of Medicine* found that the virus can remain active (and therefore be infective) for longer time on materials such as plastic and stainless steel, for a period between 72 and 168 hours in both (3 to 7 days) (Neeltje van Doremalen et al.: Aerosol and Surface Stability of SARS-CoV-2 as Compared with SARS-CoV-1. N English JMed. 382:16. (April 16, 2020). URL: https://www.nejm.org/doi/pdf/10.1056/NEJMc2004973?articleTools=true). All this poses another health risk for people handling waste, landfills and beaches or public spaces, where these COVID-19-contaminated plastic masks arrive as their final destination within the first 7 days after use.

Due to this increase in plastic pollution, various environmentally-friendly innovations aiming to replace the use of primary plastics with different soluble compounds and materials have emerged, especially in the field of plastic bags manufacture. For example, the company Solubag (https://www.solubag.cl/), manufactures polyvinyl alcohol (PVA)-based bags, compound that is 100% biodegradable upon contact with water and which arises as a sustainable and environmentally-friendly measure to replace current plastics.

Thus, different patents in the state of the art use PVA in their inventions to generate elements that are easy to eliminate, for example, patent ES 2379045 T3 discloses an embossed layer that has at least a cellulose layer having an embossing pattern and at least one layer of water-soluble material, wherein said layer of water-soluble material is made from a material capable of being dissolved after prolonged contact with water and consists of a plastic material, preferably a polyvinyl alcohol (PVA), which has been hydrolyzed to become soluble in water. However, said PVA-based layer is not used for medical face masks neither for retention or containment of pathogens.

KR 101012289 B1 refers to a sheetless face mask using a hydrogel, alginate capsules carrying fat-soluble vitamins; PVA aqueous solution and natural additives; the mask having high tensile strength with a maximum tensile strength of 500 to 2,000 kPa after freezing and thawing the mixture. However, said mask with PVA is a cosmetic face mask and is not directed to medical use masks, nor to retention or containment of pathogens.

CA 1174982 A discloses a composition which forms a gel when mixed with water and is suitable for use as a face mask, the composition being comprised of a water-soluble alginate material, a water-soluble, bivalent metal salt reactor, a phosphate retarder, a suitable extender and an anionic surfactant, wherein the gel may also comprise PVA. However, said mask with PVA is a cosmetic face mask and is not directed to medical use masks, nor to retention or containment of pathogens.

There are also other types of inventions directed to medical use masks, for example, Chilean company Coure (https://www.coure.cl/web/) manufactures masks against COVID-19 having pure copper thread fabrics. However, these medical use masks are designed with other type of material, not comprising PVA, and fabrics thereof do not degrade upon contact with water.

International application published as WO 2012/130117 discloses a facemask structure for inactivating pathogens including a facial contact layer that is non-toxic to human skin followed by a subsequent inner layer and an outer layer including an anti-pathogenic material. In this manner, active, isolated anti-pathogen layers can be provided in a multilayer mask structure. For example, an important anti-viral mask structure uses one or a mixture of acids to create a low pH environment on the first inner (or outer hydrophilic) layer so the droplets carrying virus from, e.g., a sneeze, are absorbed into and away from the surface. However, said medical use masks do not disclose comprising a material water-soluble at a temperature of at least 55°C.

Consequently, water-soluble materials are known and used in the current state of the art, but their applications have focused more on the production of sheets, bags or bag fabrics, which are easy to degrade upon contact with water. Current masks, however, are (mostly) made of non-recyclable contaminant products having components comprising plastics that cannot be disposed of or take a long time to degrade. On the other hand, there is no specification in the state of the art for a disposable face mask comprising a material water-soluble at a temperature of at least 55 °C and capable of retaining pathogenic elements and achieving their elimination by temperature.

Therefore, there is a need to find optimal, low-cost, fast-produced, environmentally-friendly materials for face mask manufacturing, so as to reduce, as much as possible, increased plastic pollution resulting from spiraling use of current disposable masks. The present invention may comprise cases where the combination of hot water-soluble elements and water-insoluble materials is strictly necessary (such as the case of fastening elements, seams or intermediate filter layers), but a reduction in the generation of waste is achieved anyway, since the face mask will be composed of a higher percentage of hot water-soluble materials and, above all, materials complying with the quality standards of international regulations, being capable of retaining small pathogens (such as viruses) and particularly being able to retain COVID-19, thus protecting the health of users using the masks of the present invention.

### SUMMARY OF THE INVENTION

It is an object of the present invention to provide a medical safety device such as a disposable face mask, effective for retaining pathogens (especially COVID-19), which complies with international quality regulations and standards and is designed with environmentally-friendly materials to reduce the pollution caused by increasing use of disposable masks during COVID-19 pandemic.

Previously, the Applicant had designed nonwoven fabric and water-soluble plastic bags, creating the Solubag company. Applicant studies arrived at a chemical formula based on PVA (a water-soluble material) to which other naturally occurring materials were added, resulting in water-soluble bags, thus avoiding ocean and environmental pollution. (Source: *https:*//*www.exploralab.cl*/*noticias*/*innovacion-chilena-de-bolsas-hidrosolubles-conquistamercados-mundiales*/).

Motivated by this findings, the Applicant make the decision to solve the health and environmental problem derived from the use of current masks due to the COVID-19 pandemic. Consequently, the present invention solves this problem based on a disposable face mask covering from chin to nasal dorsum for capture, containment and elimination of human pathogenic agents, which is comprised of at least one layer, preferably at least two superimposed layers of a material (PVA) water-soluble at a temperature of at least 55 °C and the water-soluble material having a grammage ranging from 6 to 100 g/m²; which also comprises lateral fastening elements for adjusting the mask to the user, the layers being attached by seams on their perimeter edges, the inner layer being disposed towards the user's skin and the outer layer disposed towards the environment. Said PVA-based mask is environmentally-friendly, reducing pollution and is effective in retaining viruses, such as COVID-19.

### BRIEF DESCRIPTION OF THE FIGURES

A detailed description of the invention taken in conjunction with the figures that are part of this application is now described.

It should be noted that the figures only act as support elements for a better understanding of the invention, do not represent the components on a real or proportional scale. The invention is not limited to the figures, since they represent, in a pedagogical way, the most important elements of the disposable face mask and may not include elements that are generally known in the state of the art. The figures include models showing the disposition of the material layers, wherein the disposition of sections, edges, zones and elements that form the disposable face mask are illustrated. Thus, we have the following figures:

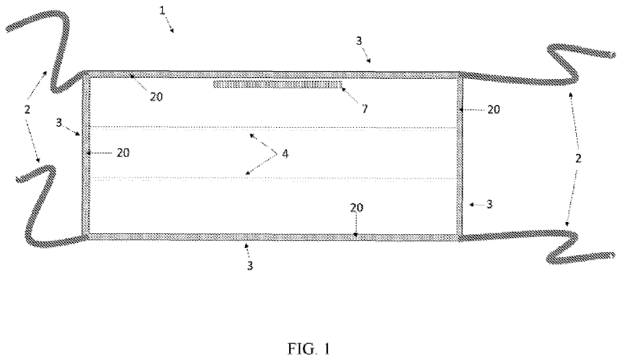

**Figure 1****: Schematic representation of a face mask with securable fasteners.** The disposable face mask (1) for capture, containment and elimination of pathogenic agents is shown, which has stripe-type lateral fastening elements (2) to be tied and adjusted to the user. The central zone of the mask includes at least two horizontal folds (4) capable of expanding vertically, the layers are attached by seams (20) at their perimeter edges (3) and a semi-flexible adjustment element (7) is disposed in a section adjacent to the upper edge, so as to be adjustable to the dorsal shape of the user's nose.

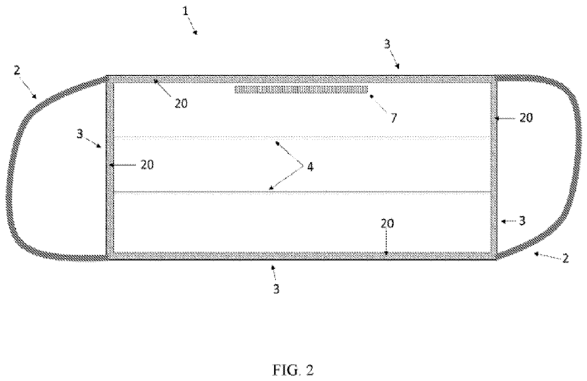

**Figure 2****: Schematic representation of a face mask with elasticated fasteners.** The disposable face mask (1) for capture, containment and elimination of pathogenic agents is shown, which has elastic-type lateral fastening elements (2) that automatically adjust to the user. The central zone of the mask includes at least two horizontal folds (4) capable of expanding vertically, the layers are attached by seams (20) on their perimeter edges (3) and a semi-flexible adjustment element (7) is disposed in a section adjacent to the upper edge, so as to be adjustable to the dorsal shape of the user's nose.
**Figure 3****: Schematic representation of the two-layer distribution.** The superimposed layers (11, 12) of a material water-soluble at a temperature of at least 55 °C are shown, the grammage of the water-soluble material ranges from 6 to 100 g/m².
**Figure 4****: Schematic representation of the three-layer distribution.** The superimposed layers (11, 12, 13) of a material water-soluble at a temperature of at least 55 °C are shown, wherein the inner layer and the outer layer are of equal grammage between 10 and 40 g/m², while the intermediate layer can have a different grammage than the inner and outer layers.
**Figure 5****: Schematic representation of the four-layer distribution.** The superimposed layers (11, 12, 13, 14) of a material water-soluble at a temperature of at least 55 °C are shown, the four layers have an equal grammage between 10 and 40 g/m².
**Figure 6****: Schematic representation of the four-layer distribution.** The superimposed layers (11, 12, 13, 14) of a material water-soluble at a temperature of at least 55 °C are shown, the inner layer and the outer layer have an equal grammage between 10 and 40 g/m², while the intermediate layers are of a different grammage than the inner and outer layers.
**Figure 7****: Schematic representation of the five-layer distribution.** The superimposed layers (11, 12, 13, 14, 15) of a material water-soluble at a temperature of at least 55 °C are shown, the five layers can be of equal or different grammage between 10 and 40 g/m².
**Figure 8****: Schematic representation of a stamped face mask.** The disposable face mask (1) including an externally visible engraving area (8) is shown.

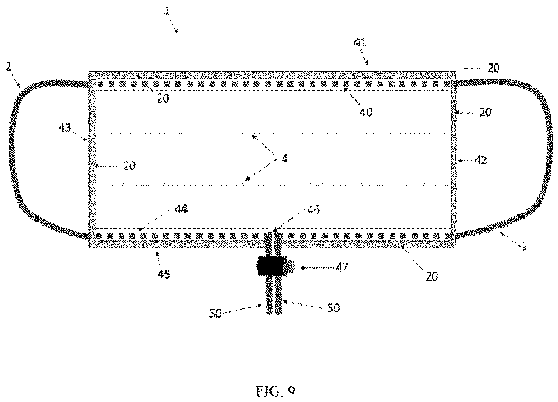

**Figure 9****: Schematic representation of a face mask with fastening** strap. A disposable face mask (1) is shown, wherein the adjustable lateral fastening elements (2) are comprised of a single fastening strap (50) moving through an inner channel (40) formed close to a transversal upper edge (41), from a longitudinal edge (42) to the opposite longitudinal edge (43), wherein an exposed ear loop is formed by the fastening strap (50) on each side of the mask, the ends of the fastening strap (50) continue disposed through an inner channel (44) formed close to the lower transversal edge (45), wherein said inner channel (44) formed close to the lower transverse edge (45) has an opening (46) in its central region from which the ends of the fastening strap (50) emerge; and a coupling element (47), through which the ends of the fastening strap (50) pass, which allows adjusting and securing the fastening strap (50) by the user.

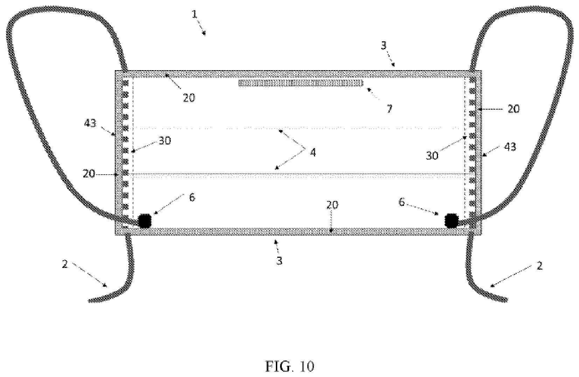

**Figure 10****: Schematic representation of a face mask with fastening** strap. A disposable face mask (1) is shown, wherein the adjustable lateral fastening elements (2) are formed from a joining point (6) in the lower corner of the mask (1), from where each element of support (2) emerge, which then externally ascends to the mask upper corner, from where it descends through an inner channel (30) formed close to a longitudinal edge (43) of the mask until it appears at the lower end of the inner channel (30), so that the end of the fastening element (2) is free and allows the fastening means (2) to be pulled according to the fitting desired by the user.
**Figure 11****: Schematic representation of a face mask with fastening strap.** An option to the model in figure 10 where the mask does not have horizontal folds (4) is shown.
**Figure 12****: Schematic representation of other models of face mask.** A face mask having an irregular geometric shape in its central axis, with curved and straight lines is shown.
**Figure 13****: Schematic representation of other models of face mask.** A face mask with an irregular geometric shape in its central axis -circular/ovoid type- is shown.

### DETAILED DESCRIPTION OF THE INVENTION

For a better understanding of the present invention, the following definitions are provided, which should only be understood as elements that help to understand the particular technical characteristics in this technical field.

As used in the present invention, the term *"disposable mask"* refers to a safety equipment that is used for user's protection, either for common use or medical, chemical, biotechnological, pharmaceutical, construction industry use, etc. Masks are designed to prevent passage of elements harmful to the user's health, including, but not limited to, fluids, microorganisms or pathogenic particles. Disposable means that they are made for a single use (and for a certain period of time), since, after completing their cycle, they must be eliminated, since the materials thereof are not reusable, either because they lose their properties after the first use or because the materials cannot be washed, cleaned, dried, disinfected, or sanitized for subsequent use.

As used in the present invention, the term "*soluble material*" refers to those that can be diluted in another material until forming a new substance (completely disintegrating from its original form). In this invention, the fabric used for making the disposable masks comprises water-soluble material, specifically a material that dissolves in hot water, starting to dissolve at 55 °C to completely dissolve at 90 °C.

As used in the present invention, the term "*grammage*" refers to the weight in grams per square meter of a paper, cardboard or textile (g/m²). The greater the grammage of a material, the more resistant and thick it will be. In the case of cloth or fabrics, the grammage allows defining the type of application where one fabric is more suitable than other.

As used in the present invention, the term "*heat sealing"* refers to a technique for joining/welding different materials by means of pressure and temperature, without the use of seams, either by the union of one thermoplastic with other thermoplastic or other compatible material; in this case, a heat sealing process is used to join the different layers of the disposable mask using a heat sealing machine .

As used in the present invention, the term *"nonwoven fabric*" is a type of fabric whose fibers are bonded by mechanical, thermal, or chemical processing, but without the need to convert the fibers into yarns. An advantage of this type of fabric is that they do not fray, therefore they are highly required in the manufacture of high-performance garments and accessories, as well as to make garments and accessories for the medical industry useful for protecting people health.

As used in the present invention, the term *"embossing"* refers to a process for producing an engraving on a material by the effect of the exerted pressure, relief patterns can be embossed.

As used in the present invention, the term *"pathogen"* refers to a biological agent capable of producing disease, damage or condition to the biology of a host (whether animal or plant). Different microorganisms and particles can be pathogenic agents including, but not limited to, fungi, yeasts, parasites, bacteria, protozoa, viruses, viroids and prions.

As used in the present invention, the term *"virus"* corresponds to a type of acellular infectious particle that can only reproduce within the cells of other organisms. They are microscopic pathogens that are smaller than fungi, yeasts, and bacteria. The causative agent of coronavirus is a specific type of virus that is infecting humans worldwide.

As used in the present invention, the term *"COVID-19"* is an acronym for coronavirus disease 2019. It is an infectious disease caused by SARS-CoV-2 virus, which produces symptoms similar to those of flu, fever, dry cough, dyspnea, myalgia and fatigue, in severe cases it is characterized by producing pneumonia, acute respiratory distress syndrome, sepsis and septic shock, even causing death. This disease has been declared a global pandemic in 2019 and is transmitted through body fluids emitted by the carrier individual (who may not have symptoms of the disease), which pass directly to a healthy individual by inhalation of the virus or hand contact with contaminated surfaces that later touch nasal, oral or tear mucous membranes, transmitting the virus.

As used in the present invention, the term *"extrusion"* is related to a process used to create objects with a defined and fixed cross section, wherein different forces, pressures or tensions are applied to a certain raw material, this allows the material to be "pushed" or "pulled" through a die of a desired cross section. The materials used for the extrusion process are generally metals, ceramics, polymers, concrete, active pharmacological compounds and food products. The process can be carried out hot or cold.

As indicated above, there are different types of masks for controlling pathogens, but not all of them are effective against COVID-19.

The most recommended is the N95 mask (equivalent to FPP2 mask), which can filter at least 95% of particles that measure more than 0.3 micrometers. It should be noted that studies carried out by different scientists found that SARS-CoV-2 measured 0.14 to 0.06 microns in diameter. So it would be much smaller than the filtering capacity of the aforementioned masks. It should be clarified, however, that up to date no scientific publications have been found that clarify the doubts about the exact size of coronavirus, since its size could change while in the air, when transported in droplets of saliva or mucus. Even so, renowned company ISESA published that "N95 standard specifies that the respirator must filter at least 95% of particles equal to or greater than 0.3 µm in diameter" adding that this does not mean that it cannot filter smaller particles. "Tests have shown that some respirators filter particles up to 0.007 µm, however, there is no certification based on a smaller diameter."

Therefore, N95 is the most accepted mask up to date to prevent coronavirus spreading, which is why the mask of the present invention was formulated to comply with standards covering from surgical mask to N95 mask, but also environmentally-friendly.

The mask of the present invention has the advantages of its layer distribution and the material being used having a grammage allowing pathogen retention (including viruses), wherein the use of at least two layers (or more) having the same or different grammage between inner layers and outer layers allows retention of COVID-19, being a mask that meets N95 standards, but produced with lower cost materials.

Another advantage is that PVA is a water-soluble material that when used as a material for layer formulation produce more environmentally sustainable masks thus avoiding excessive pollution from discarded masks.

Furthermore, PVA is a polymer having the property (depending on composition) of "determining" its decomposition temperature in water. Therefore, an advantage of the present invention is that the used fabric starts to disintegrate at 55 °C and completely disintegrates at about 90 °C, which is extremely important since according to recent studies COVID-19 can be safely removed at 56 °C. Therefore, eliminating the mask in hot water is extremely advantageous, since the virus is eliminated and the fabric is dissolved, which would prevent both the need of mask incineration by medical personnel and the elimination of virus contaminated masks from household waste, since, as indicated above, the virus can remain active for up to 7 days on disposable sanitary mask plastic surfaces.

Thus, the present invention has developed a notable advance that is the production of a disposable, good-quality, low-cost and environmentally sustainable face mask, which degrades in hot water, eliminating COVID-19. For a better understanding of the present invention, figures 1 to 13 show the representation of different types of disposable face masks, layer distribution, materials and fastening elements allowing a better understanding of the object and technical advantage of the invention.

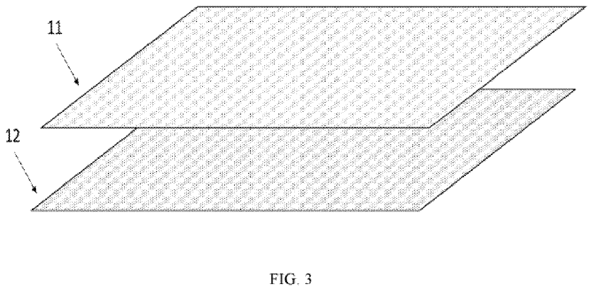

Figure 1 shows a disposable face mask (1) covering from chin to nasal dorsum, for capture, containment and elimination of human pathogenic agents, which comprises at least two superimposed layers (11, 12, as represented in figure 3) of a material water-soluble at a temperature of at least 55 °C and where water-soluble material grammage ranges from 6 to 100 g/m²; and lateral fastening elements (2) for adjusting the mask to the user, the layers (11, 12) are attached by seams (20) on their perimeter edges (3), the inner layer (soft material) being disposed towards the user's skin and the outermost layer (soft or more rigid material) disposed towards the environment. The mask central area includes at least two horizontal folds (4) capable of expanding vertically when use and a semi-flexible adjustment element (7) disposed in a section adjacent to the upper mask edge, so that is adjustable to the dorsal shape of the user's nose.

Said material is a nonwoven fabric, soluble in hot water from a water temperature of about 55°C up to fully disintegrating at a water temperature of about 90°C. In another embodiment, the semi-flexible adjustment element (7) can be located in a section adjacent to the upper edge central zone, so it is adjustable to the dorsal shape of the user's nose.

Lateral fastening elements (2) can have different shapes, optionally being inelastic and having to be tied to the user (figure 1) or being elastic and automatically adjusting to the user's body (figure 2) and may adopt any appearance, such as being made up of a material water-soluble at a temperature of at least 55 °C, or being made up of a water-insoluble material.

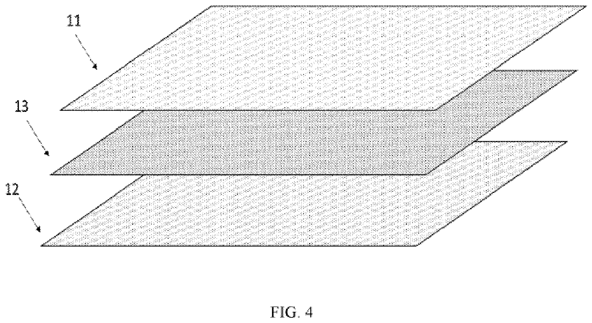

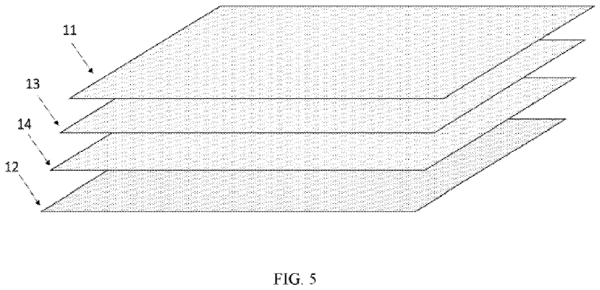

In addition, PVA internal layers can differ in number and grammage, as can be seen from figures 3 to 7, ranging from at least 2 to 5 superimposed layers having the same or a combination of different grammage (ranging between 10 and 40 g/m²). Thus, there are different options, for example, as shown in figure 3, when the mask comprises three superimposed layers (11, 12, 13) of a material water-soluble at a temperature of at least 55 °C, the inner layer and the outer layer (11, 12) have the same grammage between 10 and 40 g/m², while the intermediate layer (13) has a different grammage than the inner and outer layer. According to figures 4 and 5, when the mask comprises four superimposed layers (11, 12, 13, 14) of a material water-soluble at a temperature of at least 55 °C, all the layers can have the same grammage (figure 4), or central layers (13, 14) can have different grammage than outer layers, ranging between 10 and 40 g/m² (figure 5). Likewise, as shown in figure 5, when the mask is composed of five superimposed layers (11, 12, 13, 14, 15) of a material water-soluble at a temperature of at least 55 °C, the central layer (15) can have a different grammage than the other four layers, and can range between 10 and 40 g/m², or the intermediate layers (13, 14) can have a different grammage than the other layers.

In one embodiment of the disposable face mask (1), all its layers may be formed from different pieces of soluble material. On the other hand, the seams (20) of the layer perimeter edges (3) can be of sewing, heat sealing, ultrasound or adhesive type, with the innermost layer and the outermost layer formed from the same continuous piece of soluble material including a midline transversal fold to form the two layers.

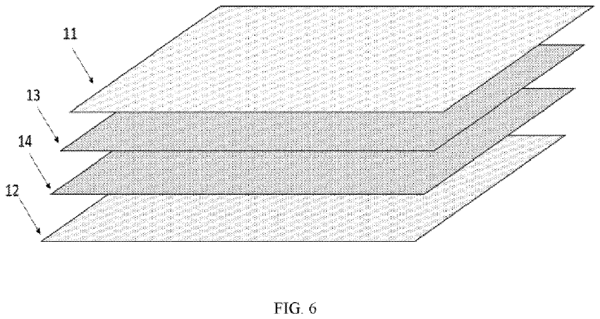

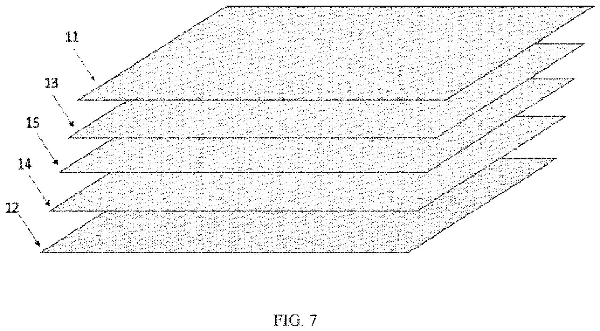

In another embodiment of the disposable face mask of the present invention, when the mask is made up of three, four or five layers, at least one of its intermediate layers will be made up of a material water-soluble at a temperature of at least 55°C. Said intermediate layer of material water-soluble at a temperature of at least 55 °C being selected from the group consisting of: melt-blown, filter paper, paper coated with a polymeric component or an insoluble polymeric layer, as long as said intermediate layer does not exceed 48% by weight of the complete mask total weight. So most of the disposable mask weight corresponds to material water-soluble at a temperature of at least 55 °C. In this way, the disposable mask of the present invention will continue to be more environmentally-friendly than the current masks known in the state of the art, since the waste generated therefrom will be significantly lower and pathogen free. Then, when the disposable face mask is made up of three superimposed layers, as shown in figure 4, the intermediate layer (13) may be made of a material insoluble in water at a temperature of at least 55 °C, wherein the water-insoluble material that forms the intermediate layer can be selected from the group consisting of: melt-blown, filter paper, paper coated with a polymeric component or an insoluble polymeric layer. Likewise, when the disposable face mask is made up of four or five superimposed layers, as shown in figures 6 and 7, at least one of the intermediate layers may be made of a material insoluble in water at a temperature of at least 55 °C, wherein the water-insoluble material that forms the intermediate layer can be selected from the group consisting of: melt-blown, filter paper, paper coated with a polymeric component or an insoluble polymeric layer. Filter papers are typically known in laboratory filtration processes and are composed of up to about 98% cellulose, depending on their degree of preparation, they can filter particles of up to 2.5 microns. Papers coated with a polymeric component are widely known in the state of the art, they are composed of a high grammage paper -at least 60 g/m²⁻ and are coated with a polymeric component, which can be in the form of wax, to cover the pores formed by paper interfibrillar bonds. The polymeric layer can be any type of film formed by a polymeric material known in the state of the art, such as, for example, polystyrene, polyethylene and nylon. Melt-blown, meanwhile, is a nonwoven fabric obtained by fusion or direct spinning in which extruded synthetic filaments are sucked with high-pressure air jets to form very fine random length fibers that are deposited on a conveyor belt, this melt-blown nonwoven fabric has good filterability, absorption and obstruction capacity.

As shown in figure 9, in an option of the disposable face mask (1), the adjustable lateral fastening elements (2) are made up of a single fastening strap (50) that moves through an inner channel (40) formed close to an upper transverse edge (41), from a longitudinal edge (42) to the opposite longitudinal edge (43), where an ear flap is formed exposed by the fastening strap (50) on each side of the mask, the ends of the fastening strap (50) continue disposed through an inner channel (44) formed close to the lower transverse edge (45), wherein said inner channel (44) formed close to the lower transverse edge (45) has an opening (46) in its central region through which the ends of the fastening strap (50) emerge; and a coupling element (47), through which the ends of the fastening strap (50) pass, which allows fitting and securing the fastening strap (50) by the user.

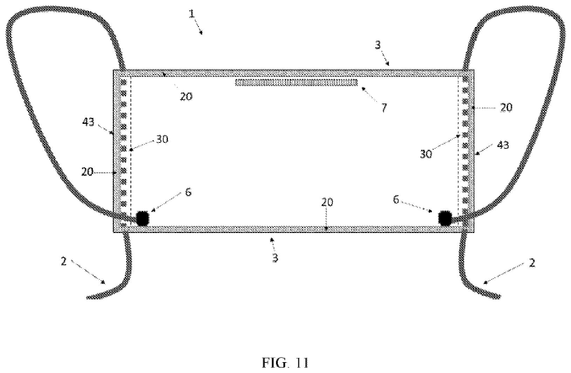

Likewise, in another embodiment, figure 10 shows the disposable face mask (1), where the adjustable lateral fastening elements (2) can be formed from a joining point (6) in the lower corner of the mask. (1), either through the internal or external face of the mask, from where each fastening element (2) originates, which then externally ascends to the upper corner of the mask, from where it descends through an inner channel (30) formed close to a longitudinal edge (43) of the mask until it appears at the lower end of the inner channel (30), so that the end of the fastening element (2) is free and allows to pull the fastening means (2) according to the fitting desired by the user. On the other hand, figure 11 shows a design similar to figure 10, but the disposable face mask (1) does not have two horizontal folds (4), since the inclusion of the fastening elements 2, as shown above, allow a vertical adjustment to the user's face.

The particularity of superimposed layers -which make up the disposable face mask- having a rigid or soft texture will be given at the time of making the nonwoven fabric from which each layer is formed. If a rigid texture is desired, the fibers that make up the nonwoven fabric will be more pressed together and may include a stiffening agent; on the contrary, if a soft texture is desired, the fibers will be less pressed (more loose), which will give the fabric a plush feeling.

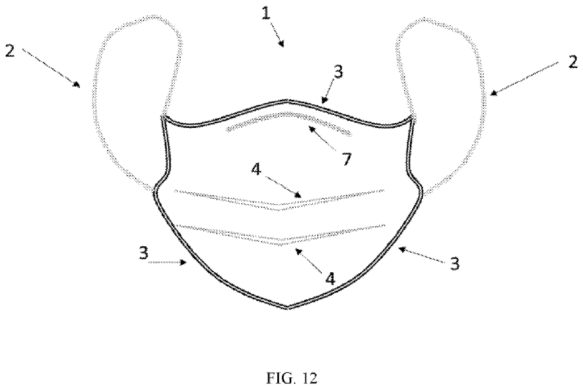

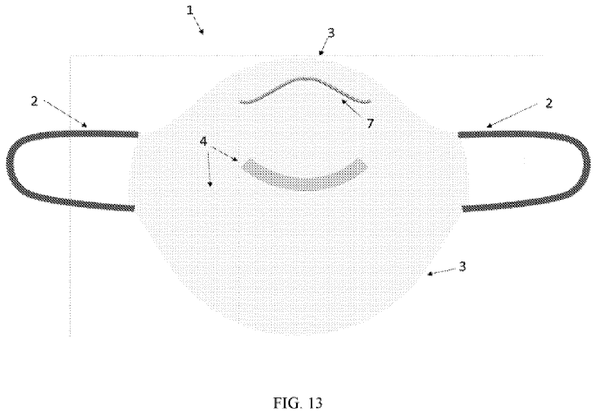

Figures 12 and 13 show embodiments of disposable face masks (1) having a regular or irregular geometric shape, different from a square or rectangular shape, including shapes with circular, ovoid perimeter edges (3) or a mix of curved and straight lines.

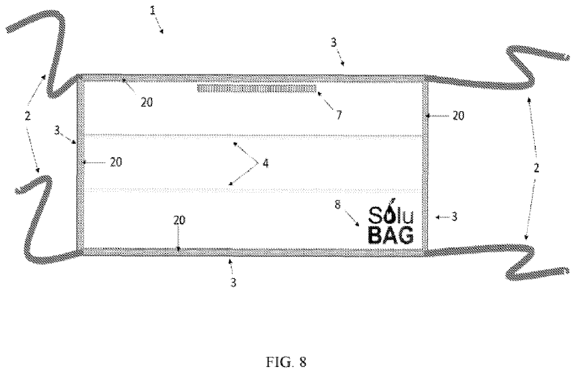

In addition to the different options in shapes and designs of the aforementioned disposable masks, the disposable face mask (1) according to the present invention may include an engraving area (8) externally visible on the mask, as shown in figure 8. However, it should be noted that said area can be located in any zone of the mask and is not restricted to the sector illustrated in figure 8. This engraving can be any one of an embossing, a printing, a stamping or a writing.

Finally, the disposable face mask (1) could be optionally designed to be comprised of at least one layer of a material water-soluble at a temperature of at least 55 °C, with the water-soluble material grammage ranging from 6 to 100 g/m²; and lateral fastening elements (2) for adjusting the mask to the user.

### EXAMPLES

The description of the rigorous tests to demonstrate the effectiveness of a mask for retaining harmful elements (such as pathogens) and compliance with mask manufacture quality standards is shown through the following comparative examples.

### Example 1: Formulation of disposable face mask.

The mask is made based on a melt-extruded fabric, such as a nonwoven fabric, and more specifically, the mask is made of a melt-blown nonwoven fabric comprising a polyvinyl alcohol (PVA) resin capable of being dissolved in hot water.

Polyvinyl alcohol is traditionally made by polymerizing vinyl acetate and then hydrolyzing the polymer to an alcohol. Polyvinyl alcohols differ in their polymerization and hydrolysis degree. The temperature at which the PVA dissolves can change by altering polymer orientation, changing its hydrolysis degree and crystallization, which are techniques widely known and disclosed in the state of the art. The present invention obtained a PVA fabric that starts to dissolve at 55 °C and ends at 90 °C in order to guarantee COVID-19 elimination, which is eliminated at 56 °C.

A melt-blown nonwoven fabric is made in the same manner as a spunbond nonwoven fabric, which are collectively referred to as melt-extrusion or melt-spun. In the process, a molten polymer is extruded under pressure through orifices in a spinning nozzle, impacted on by high-speed air, entraining the filaments as they exit the die in the melt-blown process. The energy of this step is such that the filaments formed are greatly reduced in diameter and fractured so as to produce microfibers of finite length. This differs from the spunbonding process wherein the continuity of the filaments is preserved. The process for forming either a single layer or a multi-layer fabric is continuous, i.e., the process steps from filament extrusion to form the first layer until the bonded band is wound up are not interrupted. In this way, the different conditions of the extruder are programmed to form soluble PVA material at a desired grammage, e.g., for a PVA fabric having between 6 and 100 g/m².

This nonwoven fabric can also be a layer within a multi-layer construction, whereby the composite or laminated fabric is then at least temporarily consolidated, typically by methods involving heat and pressure, such as by point thermal bonding. The water-soluble material fabrics are cut into the desired shapes, and the different mask layers, folds, edges and side ties are specifically bonded by sewing, heat sealing, ultrasound or adhesive bonding to shape the mask.

As indicated above, the Applicant had already worked with PVA polymers to produce plastic and nonwoven fabric bags, therefore, the components used in the manufacturing process of the fabrics of the present invention are approved and certified. In addition, the Applicant has spent years working with many materials to come up with the final formula that can use the same extruder machines.

### Example 2: PVA Fabric Spray Test.

Scope: This test is a simple method, which consists of using an aerosol or spray for simulating what a sneeze would be at a distance of no more than 10 cm from the inside of a mask (or fabric to be tested) and analyze if the aerosol fluid is capable of leaking and transporting to the other side of the mask or fabric analyzed.

Results: This experiment was carried out using the PVA fabric alone, i.e., before forming the mask structure, without stitches, bonds, folds, lateral fastening elements, etc., in order to analyze if the fabric was capable of retaining or letting pass aerosol droplets. From 1 layer up to 5 layers having a grammage between 10 and 40 g/m² were used in this case. The result was that all layers were capable to retain aerosol droplets, preventing the passage of material to the other side.

### Example 3: Test Methods to Determine Effectiveness of Medical Masks.

Scope: The masks designed are based on the standard of the American Society of Testing and Materials (ASTM F2100), which indicates how the fabrics are tested for compliance with the standard based on the Standard Specification for Performance of Materials Used in Medical Face Masks. The standard classifies mask materials into three levels (see Table 1).

This specification covers testing and requirements for materials used in the manufacture of medical face masks that are used to provide healthcare services, such as surgery and patient care. This specification provides the medical mask material performance classification. Medical mask material performance is based on bacterial filtration efficiency, differential pressure, sub-micron particulate filtration efficiency, resistance to penetration by synthetic blood, and flammability tests.

It should be noted that this specification does not address all aspects of medical mask design and performance. This specification does not specifically assess the effectiveness of medical mask designs related to barrier and breathability properties. This specification does not apply to regulated respiratory protection, which may be necessary for some health care services.

**Table 1: US ASTM Values for Medical Mask Fabrics.**

| **ASTM F2100 (20)** | **Level 1** | **Level 2** | **Level 3** |
|---|---|---|---|
| BFE Bacterial Filtration Efficiency of 3.0 µm droplet test with aerosol of Staphylococcus aureus | BFE > 95% | BFE > 98% | BFE > 98% |
| PFE: Particle Filtration Efficiency of 0.1 µm according to ASTM F2299 | PFE > 95% | PFE > 98% | PFE > 98% |
| Fluid Resistance (synthetic blood) ASTM 1862 | 80 mmHg | 120 mmHg | 160 mmHg |
| Pressure Difference MIL-M-36954C mm H₂O/cm² | < 4.0 | < 5.0 | < 5.0 |
| Flame spread. 16 CFR Part 1610 | Class 1 | Class 1 | Class 1 |
| Similarity to EN 14683 and ISO 22609:2004 | Level 1 similar to Type I | Level 1 similar to Type II | Level 1 similar to Type II |

As indicated in Table 1, *"PFE according to ASTMF 2299"* assesses small particles filtration. Latex particles are hydrolyzed, dried and passed through the mask. Efficiency is calculated by comparing reference sample to filtered sample. A mask is considered to have sub-micron filtration if EFP is equal to or greater than 98%. National Institute for Occupational Safety and Health (NIOSH) requires this test for any N95 respirator. This test measures filter efficiency and penetration of a 0.3 µm aerosolized sodium chloride particle at a flow rate of 85 liters per minute, with a filtration efficiency of 95%.

As indicated in Table 1, *"ASTM 1862 Liquid Resistance"* assesses the resistance of a medical mask to penetration by synthetic blood splashes. The mask is subjected to 85% humidity for 4 hours, then placed onto a convex device that simulates the person's face. 2 ml at a distance of 30 cm and at a right angle are thrown at different pressures,. Artificial blood specially prepared is used and shot in the form of spray at pressures of 80, 120 and 160 mmHg. This test is repeated 32 times with different pressures, to pass the test (by visual inspection) at least 29 must pass the test. Higher resistance means that the user is better protected by the mask against splashes of contaminated fluids, especially since 120 mmHg corresponds to the average systolic pressure that is important against the rupture of small arteries.

As indicated in Table 1, *"Pressure Difference MIL-M-36954C mm H₂O*/*cm²",* also called differential pressure (Delta P), indicates the resistance to breathing of a controlled flow of air passing through all mask layers. The flow before and after is measured and the difference is divided by the area (in cm²). This allows the masks to be classified as not resistant to fluids (if their values are <3.0 mm H₂O/cm²), or as resistant to fluids (if their values are <5.0 mm H₂O/cm²).

Results: The masks of the present invention were tested according to ASTM F2100 standard, tests were carried out with masks from 2 to 5 layers. Masks subjected to the tests were made up as follows:
- Mask 1: two layers of a material (PVA) water-soluble at a temperature of at least 55 °C and having the same grammage of 25 g/m².
- Mask 2: three layers of a material (PVA) water-soluble at a temperature of at least 55 °C, the middle layer having a grammage of 25 g/m² and the inner and outer layers having the same grammage of 20 g/m².
- Mask 3: four layers of a material (PVA) water-soluble at a temperature of at least 55 °C and having the same grammage of 20 g/m².
- Mask 4: four layers (two inner and two outer) of a material (PVA) water-soluble at a temperature of at least 55 °C and having the same grammage of 35 g/m², and an intermediate layer of melt-blown filter material.

Results obtained are shown in Table 2.

**Table 2: ASTMF2100 test results on different masks.**

| **ASTM F2100** | **Mask 1** | **Mask 2** | **Mask 3** | **Mask 4** |
|---|---|---|---|---|
| BFE | 95% | 96% | 97% | 98% |
| PFE | 95% | 95% | 95% | 96% |
| Fluid Resistance | 120 mm Hg | 120 mm Hg | 120 mm Hg | 120 mm Hg |
| Pressure Difference mm H₂O/cm² | 4 | 4.5 | 4.9 | 5.1 |

This demonstrates that the masks of the present invention are capable of retaining over 95% of the particles and pathogens that were tested and are resistant to fluids and blood penetration, complying with the standard and being equally effective as a N95-type mask, in any of the used layer conformations.

### Example 4: Mask Comfort Test.

Scope: This test shows that lower resistance indicates lower wearing comfort (mask feels cooler and easier to breathe), this mask will hold its shape better with less pressure on the material and there will be less non-filtered air leakage around the mask. It is based on the user's perception based on a classification from 1 to 5 according to how cool or hot they feel.

**Table 3: Medical Mask Comfort Test Values**

| **Value** | **Perception** |
|---|---|
| Over 5 | Hot |
| 4-5 | Very Warm |
| 3-4 | Warm |
| 2-3 | Cool |
| 1-2 | Very cool |

Results: The tests were carried out with masks having from 2 to 5 layers and made according to the configuration given for each mask in example 3. The results obtained are shown in Table 4.

**Table 4: Results of Medical Masks Comfort Test**

| Mask Type | Value | Perception |
|---|---|---|
| Mask 1 | 2 | Cool |
| Mask 2 | 2.8 | Cool |
| Mask 3 | 4.2 | Very Warm |
| Mask 4 | 3.7 | Warm |

This demonstrates that the masks of the present invention are bearable for the user in their different layer conformation, although mask comfort decreases from 4 layers, the user's perception is warm air flow after prolonged use.

Therefore, the previous examples and description of the invention support the disposable face mask in any of its forms, demonstrating that it presents a technical advantage over the state of the art, since the present mask complies with the standard (being similar to N95), but its materials have lower cost and are environmentally-friendly, allowing for more sustainable disposal after the mask is used.

The scope of the mask described in the present invention should not be limited only to the components described in the text itself (number of layers and designs), but can also include other types of products that benefit from a material such as that of the present invention and other types of designs not shown in the figure section.

## Claims

1. Disposable face mask (1) covering from chin to nasal dorsum, for capture, containment and elimination of human pathogenic agents, **CHARACTERIZED in that** it is comprised of:
- at least two superimposed layers (11, 12) of a material water-soluble at a temperature of at least 55 °C and the grammage of the water-soluble material ranges from 6 to 100 g/m²; and
- lateral fastening elements (2) for adjusting the mask to the user, wherein the layers (11, 12) are attached by seams (20) on their perimeter edges (3), the inner layer being disposed towards the user's skin and the outermost layer disposed towards the environment.

2. The disposable face mask (1) according to claim 1, **CHARACTERIZED in that** the mask central area includes at least two horizontal folds (4) capable of expanding vertically when used.

3. The disposable face mask (1) according to claim 1, **CHARACTERIZED in that** it is comprised of three superimposed layers (11, 12, 13) of a material water-soluble at a temperature of at least 55 °C, wherein the inner layer and the outer layer have the same grammage between 10 and 40 g/m² while the intermediate layer has a different grammage than the inner and outer layers.

4. The disposable face mask (1) according to claim 3, **CHARACTERIZED in that** the intermediate layer is made of a material water-soluble at a temperature of at least 55 °C.

5. The disposable face mask (1) according to claim 4, **CHARACTERIZED in that** the water-insoluble material forming the intermediate layer is selected from the group consisting of: melt-blown, filter paper, paper coated with a polymeric component or an insoluble polymeric layer.

6. The disposable face mask (1) according to claim 1, **CHARACTERIZED in that** it is comprised of four superimposed layers (11, 12, 13, 14) of a material that is water-soluble at a temperature of at least 55 °C, wherein the four layers have the same grammage ranging between 10 and 40 g/m².

7. The disposable face mask (1) according to claim 1, **CHARACTERIZED in that** it is comprised of five superimposed layers (11, 12, 13, 14, 15) of a material water-soluble at a temperature of at least 55 °C, wherein the central layer has a different grammage than the other four layers, and ranges between 10 and 40 g/m².

8. The disposable face mask (1) according to claim 7, **CHARACTERIZED in that** at least one of the intermediate layers (13, 14, 15) is made of a material water-soluble at a temperature of at least 55 °C.

9. The disposable face mask (1) according to claim 8, **CHARACTERIZED in that** the water-insoluble material forming at least one of the intermediate layers (13, 14, 15) is selected from the group consisting of: melt-blown, filter paper, paper coated with a polymeric component or an insoluble polymeric layer.

10. The disposable face mask (1) according to any one of the preceding claims, **CHARACTERIZED in that** the seams (20) of the perimeter edges (3) of the layers can be of sewing, heat sealing, ultrasound or adhesive type.

11. The disposable face mask (1) according to claim 1, **CHARACTERIZED in that** the lateral fastening elements (2) can be elastic or inelastic straps.

12. The disposable face mask (1) according to claim 11, **CHARACTERIZED in that** the lateral fastening elements (2) are adjustable to the user's build.

13. The disposable face mask (1) according to claim 12, **CHARACTERIZED in that** the adjustable lateral fastening elements (2) are formed from a joining point (6) in the lower corner of the mask (1) from where each fastening element (2) originates, which then ascends externally to the upper corner of the mask, from where it descends through an inner channel (30) formed close to a longitudinal edge (43) of the mask until it appears at the lower end of the inner channel (30), so that the end of the fastening element (2) is free and allows pulling the fastening means (2) according to the fitting desired by the user.

14. The disposable face mask (1) according to claim 12, **CHARACTERIZED in that** the adjustable lateral fastening elements (2) are comprised of:
- a single fastening strap (50) that moves through an inner channel (40) formed close to an upper transverse edge (41), from a longitudinal edge (42) to the opposite longitudinal edge (43), wherein an ear flap is formed on each side of the mask exposed by the fastening strap (50), the ends of the fastening strap (50) continue to be disposed by an internal channel (44) formed close to the lower transverse edge (45), wherein said inner channel (44) formed close to the lower transverse edge (45) has an opening (46) in its central region through which the ends of the fastening strap (50) emerge; and
- a coupling element (47), through which the ends of the fastening strap (50) pass, which allows adjusting and securing the fastening strap (50) by the user.

15. The disposable face mask (1) according to claim 11, **CHARACTERIZED in that** the lateral fastening elements (2) are made of a material that is water-soluble at a temperature of at least 55 °C.

16. The disposable face mask (1) according to claim 11, **CHARACTERIZED in that** the lateral fastening elements (2) are made of a water-insoluble material.

17. The disposable face mask (1) according to claim 1, **CHARACTERIZED in that** the water-soluble material is a nonwoven fabric soluble in hot water from a water temperature of about 55 °C until its total disintegration is achieved at a water temperature of about 90 °C.

18. The disposable face mask (1) according to any one of the preceding claims, **CHARACTERIZED in that** it includes an externally visible engraving area (8).

19. The disposable face mask (1) according to claim 18, **CHARACTERIZED in that** the engraving can be any one of an embossing, a printing, a stamping or a writing.

20. The disposable face mask (1) according to any one of the preceding claims, **CHARACTERIZED in that** a semi- flexible adjustment element (7) is disposed in a section adjacent to the upper edge, so it is adjustable to the dorsal shape of the user's nose.

21. The disposable face mask (1) according to claim 1, **CHARACTERIZED in that** the perimeter edges (2) thereof can be straight, curved or a combination of both types.

22. The disposable face mask (1) according to claim 21, **CHARACTERIZED in that** the mask (1) can have a regular or irregular geometric shape.

23. The disposable face mask (1) according to claim 22, **CHARACTERIZED in that** the mask (1) can have a square, rectangular, circular, ovoid geometric shape or a mixture of curved and straight lines.

24. The disposable face mask (1) according to any one of the preceding claims, **CHARACTERIZED in that** each of the superimposed layers, independently of the rest of the layers, can have a rigid or soft texture.

25. Disposable face mask (1) covering from chin to nasal dorsum for capture, containment and elimination of human pathogenic agents, **CHARACTERIZED in that** it is comprised of:
- at least one layer of a material water-soluble at a temperature of at least 55 °C and where the grammage of the water-soluble material ranges from 6 to 100 g/m²; and
- lateral fastening elements (2) for adjusting the mask to the user.

## Amended claims

### Amended claims under Art. 19.1 PCT

1. Disposable face mask (1) covering from chin to nasal dorsum, for capture, containment and elimination of human pathogenic agents, **CHARACTERIZED in that** it is comprised of:
- at least two superimposed layers (11, 12) of a water-soluble material, based on polyvinyl alcohol, at a temperature of at least 55 °C and the grammage of the water-soluble material ranges from 6 to 100 g/m²; and
- lateral fastening elements (2) for adjusting the mask to the user, wherein the layers (11, 12) are attached by seams (20) on their perimeter edges (3), the inner layer being disposed towards the user's skin and the outermost layer disposed towards the environment.

2. The disposable face mask (1) according to claim 1, **CHARACTERIZED in that** the mask central area includes at least two horizontal folds (4) capable of expanding vertically when used.

3. The disposable face mask (1) according to claim 1, **CHARACTERIZED in that** it is comprised of three superimposed layers (11, 12, 13), at least two of them being of a material water-soluble at a temperature of at least 55 °C, wherein the inner layer and the outer layer have the same grammage between 10 and 40 g/m² while the intermediate layer has a different grammage than the inner and outer layers.

4. The disposable face mask (1) according to claim 3, **CHARACTERIZED in that** the intermediate layer is made of a material water-soluble at a temperature of at least 55 °C.

5. The disposable face mask (1) according to claim 4, **CHARACTERIZED in that** the water-insoluble material forming the intermediate layer is selected from the group consisting of: melt-blown, filter paper, paper coated with a polymeric component or an insoluble polymeric layer.

6. The disposable face mask (1) according to claim 1, **CHARACTERIZED in that** it is comprised of four superimposed layers (11, 12, 13, 14) of a material that is water-soluble at a temperature of at least 55 °C, wherein the four layers have the same grammage ranging between 10 and 40 g/m².

7. The disposable face mask (1) according to claim 1, **CHARACTERIZED in that** it is comprised of five superimposed layers (11, 12, 13, 14, 15), at least four of them being of a material water-soluble at a temperature of at least 55 °C, wherein the central layer has a different grammage than the other four layers, and ranges between 10 and 40 g/m².

8. The disposable face mask (1) according to claim 7, **CHARACTERIZED in that** at least one of the intermediate layers (13, 14, 15) is made of a material water-soluble at a temperature of at least 55 °C.

9. The disposable face mask (1) according to claim 8, **CHARACTERIZED in that** the water-insoluble material forming at least one of the intermediate layers (13, 14, 15) is selected from the group consisting of: melt-blown, filter paper, paper coated with a polymeric component or an insoluble polymeric layer.

10. The disposable face mask (1) according to any one of the preceding claims, **CHARACTERIZED in that** the seams (20) of the perimeter edges (3) of the layers can be of sewing, heat sealing, ultrasound or adhesive type.

11. The disposable face mask (1) according to claim 1, **CHARACTERIZED in that** the lateral fastening elements (2) can be elastic or inelastic straps.

12. The disposable face mask (1) according to claim 11, **CHARACTERIZED in that** the lateral fastening elements (2) are adjustable to the user's build.

13. The disposable face mask (1) according to claim 12, **CHARACTERIZED in that** the adjustable lateral fastening elements (2) are formed from a joining point (6) in the lower corner of the mask (1) from where each fastening element (2) originates, which then ascends externally to the upper corner of the mask, from where it descends through an inner channel (30) formed close to a longitudinal edge (43) of the mask until it appears at the lower end of the inner channel (30), so that the end of the fastening element (2) is free and allows pulling the fastening means (2) according to the fitting desired by the user.

14. The disposable face mask (1) according to claim 12, **CHARACTERIZED in that** the adjustable lateral fastening elements (2) are comprised of:
- a single fastening strap (50) that moves through an inner channel (40) formed close to an upper transverse edge (41), from a longitudinal edge (42) to the opposite longitudinal edge (43), wherein an ear flap is formed on each side of the mask exposed by the fastening strap (50), the ends of the fastening strap (50) continue to be disposed by an internal channel (44) formed close to the lower transverse edge (45), wherein said inner channel (44) formed close to the lower transverse edge (45) has an opening (46) in its central region through which the ends of the fastening strap (50) emerge; and
- a coupling element (47), through which the ends of the fastening strap (50) pass, which allows adjusting and securing the fastening strap (50) by the user.

15. The disposable face mask (1) according to claim 11, **CHARACTERIZED in that** the lateral fastening elements (2) are made of a material that is water-soluble at a temperature of at least 55 °C.

16. The disposable face mask (1) according to claim 11, **CHARACTERIZED in that** the lateral fastening elements (2) are made of a water-insoluble material.

17. The disposable face mask (1) according to claim 1, **CHARACTERIZED in that** the water-soluble material is a nonwoven fabric soluble in hot water from a water temperature of about 55 °C until its total disintegration is achieved at a water temperature of about 90 °C.

18. The disposable face mask (1) according to any one of the preceding claims, **CHARACTERIZED in that** it includes an externally visible engraving area (8).

19. The disposable face mask (1) according to claim 18, **CHARACTERIZED in that** the engraving can be any one of an embossing, a printing, a stamping or a writing.

20. The disposable face mask (1) according to any one of the preceding claims, **CHARACTERIZED in that** a semi- flexible adjustment element (7) is disposed in a section adjacent to the upper edge, so it is adjustable to the dorsal shape of the user's nose.

21. The disposable face mask (1) according to claim 1, **CHARACTERIZED in that** the perimeter edges (2) thereof can be straight, curved or a combination of both types.

22. The disposable face mask (1) according to claim 21, **CHARACTERIZED in that** the mask (1) can have a regular or irregular geometric shape.

23. The disposable face mask (1) according to claim 22, **CHARACTERIZED in that** the mask (1) can have a square, rectangular, circular, ovoid geometric shape or a mixture of curved and straight lines.

24. The disposable face mask (1) according to any one of the preceding claims, **CHARACTERIZED in that** each of the superimposed layers, independently of the rest of the layers, can have a rigid or soft texture.

25. Disposable face mask (1) covering from chin to nasal dorsum for capture, containment and elimination of human pathogenic agents, **CHARACTERIZED in that** it is comprised of:
- at least one layer of a water-soluble material, based on polyvinyl alcohol, at a temperature of at least 55 °C and where the grammage of the water-soluble material ranges from 6 to 100 g/m²; and
- lateral fastening elements (2) for adjusting the mask to the user.
